# EUROPEAN PATENT SPECIFICATION

(11) **EP 3 252 329 B1**
(45) Date of publication and mention of the grant of the patent: **24.10.2018**
(21) Application number: 17159477.3
(22) Date of filing: 07.03.2017
(51) Int. Cl.: F16D 3/70, B62M 9/02, B60B 27/04, F16F 15/16, B62M 6/70

(54) **STRADDLED VEHICLE**
GRÄTSCHSITZFAHRZEUG
VÉHICULE À ENFOURCHER

(30) Priority: 03.06.2016 JP 2016111789
(43) Date of publication of application: 06.12.2017
(73) Proprietor: Yamaha Hatsudoki Kabushiki Kaisha, Iwata-shi, Shizuoka 438-8501 (JP)
(72) Inventor: SUMI, Takahiro, Iwata-shi, Shizuoka 438-8501 (JP); SUZUKI, Masaomi, Iwata-shi, Shizuoka 438-8501 (JP)
(74) Representative: Grünecker Patent- und Rechtsanwälte PartG mbB

(56) References cited:
- EP-A1- 0 555 643
- EP-A2- 0 135 646
- DE-A1- 4 328 596
- DE-U1- 20 005 861
- FR-A- 1 392 955
- JP-A- H11 321 206
- US-A- 5 622 244
- Anonymous: "motorcycle - What are the differences between a normal and an anti-hopping/slipper clutch? - Motor Vehicle Maintenance & Repair Stack Exchange", , 1 June 2016 (2016-06-01), XP055412569, Retrieved from the Internet: URL:https://mechanics.stackexchange.com/qu estions/29174/what-are-the-differences-bet ween-a-normal-and-an-anti-hopping-slipper- clutch [retrieved on 2017-10-04]

## Description

The present invention relates to a straddled vehicle according to the preamble of independent claim 1. Such a straddled vehicle can be taken from the prior art JP 2007 118684A.

Known straddled vehicles include motorcycles. In a motorcycle, driving power from the engine is transmitted to the rear wheel via a chain. This causes the motorcycle to travel.

A motorcycle travels while being affected by various factors. Particularly, a race motorcycle travels at high speeds by exploiting its performance to the maximum extent and, as such, the travelling of such a motorcycle is affected by those various factors to larger degrees.

The various factors affecting the travelling of the motorcycle are categorized as external factors and internal factors. The external factors include, for example, road surface conditions, changes in the friction between the road surface and tire, changes in the grounding load of the rear wheel, and winds hitting the travelling vehicle. The internal factors include, for example, variations in the driving power transmitted to the rear wheel. Variations in the driving power transmitted to the rear wheel include, for example, those originating from throttle-lever operations by the rider, those resulting from variations in the torque generated by the engine, those produced in the route of transmission of driving power from the engine to the rear wheel, and those caused by shocks generated by shift changes during acceleration and deceleration. As they are transmitted to the wheel body via the chain and sprocket, vibrations occur in the rear wheel. Further, external factors may cause movements of the wheel body via the tire, causing vibrations in the rear wheel. In addition, these variations/movements may affect each other, deteriorating the vibrations in the rear wheel.

JP 2007-118684 A proposes a structure for reducing impact-like loads transmitted to the rear wheel via the chain. According to this publication, a damper housing is provided on the hub of the wheel body. A plurality of dampers are disposed in the damper housing. The damper housing is covered with a member to which the sprocket is attached. The rotation of the sprocket is transmitted to the wheel body via the dampers.

According to the above publication, the dampers are made of rubber. This arrangement may reduce impact-like loads transmitted to the rear wheel via the chain. However, it is not sufficient for damping vibrations caused by variations in the driving power transmitted to the rear wheel via the chain. Further, it is not sufficient for damping vibrations caused by movements transmitted to the rear wheel from the road surface.

An object of the present invention is to provide a straddled vehicle capable of damping vibrations in the rear wheel caused by variations in the driving power transmitted to the rear wheel via the chain or movements transmitted to the rear wheel from the road surface.

According to the present invention said object is solved by a straddled vehicle having the features of independent claim 1. Preferred embodiments are laid down in the dependent claims.

A straddled vehicle according to an embodiment includes: an engine; a rear wheel; and a chain. The rear wheel is located rearward of the engine. The chain transmits driving power from the engine to the rear wheel. The rear wheel includes an axle, a wheel hub, a plurality of bearings, an annular member, a sprocket, an elastic member, and a damping mechanism. The axle extends in the left-to-right direction with respect to the vehicle. The wheel hub is shaped as a cylinder that extends in the left-to-right direction with respect to the vehicle. The axle is inserted through the wheel hub. The plurality of bearings are located between the wheel hub and the axle as determined along a radial direction of the wheel hub. The plurality of bearings rotatably support the wheel hub on the axle. The annular member is attached to an end of the wheel hub as determined along the axial direction thereof. The annular member is positioned to be coaxial with the wheel hub. The annular member is positioned to be rotatable relative to the wheel hub in a circumferential direction of the wheel hub. The sprocket is coupled to the annular member. The chain is wound around the sprocket. When the annular member rotates relative to the wheel hub, the elastic member elastically deforms depending on the amount of rotation of the annular member relative to the wheel hub. The annular member rotates relative to the wheel hub when driving power is transmitted to the annular member via the sprocket. The damping mechanism damps a vibration in one of the annular member and the wheel hub after the annular member has rotated relative to the wheel hub. The vibration to be damped by the damping mechanism is a vibration acting to rotate one of the annular member and the wheel hub relative to the other in a circumferential direction with respect to their positions after the rotation of the annular member relative to the wheel hub.

The above-described straddled vehicle may damp vibrations in the rear wheel caused by variations in the driving power transmitted to the rear wheel via the chain or movements transmitted to the rear wheel from the road surface.

### BRIEF DESCRIPTION OF THE DRAWINGS

[FIG. 1] FIG. 1 is a left side view of a motorcycle according to an embodiment.
[FIG. 2] FIG. 2 is a perspective view of the rear wheel of the motorcycle shown in FIG. 1.
[FIG. 3] FIG. 3 is an exploded perspective view of the rear wheel of the motorcycle shown in FIG. 1.
[FIG. 4] FIG. 4 is a cross-sectional view of the rear wheel of the motorcycle shown in FIG. 1.
[FIG. 5] FIG. 5 is an enlarged cross-sectional view of a portion of FIG. 4.
[FIG. 6] FIG. 6 is an enlarged cross-sectional view of the annular portion of wheel hub.
[FIG. 7] FIG. 7 is an end-side view of the annular portion of the wheel hub as seen in an axial direction.
[FIG. 8] FIG. 8 is an enlarged cross-sectional view of the annular member.
[FIG. 9] FIG. 9 is an end-side view of the annular member as viewed in an axial direction.
[FIG. 10] FIG. 10 is an enlarged cross-sectional view of a portion of FIG. 5.
[FIG. 11] FIG. 11 is a graph showing the magnitude of the driving power transmitted to the rear wheel when the motorcycle is travelling.
[FIG. 12] FIG. 12 is a conceptual view of an example application of the damping mechanism.
[FIG. 13] FIG. 13 illustrates an example application of an elastic member,
[FIG. 14] FIG. 14 illustrates another example application of the elastic member.
[FIG. 15] FIG. 15 illustrates yet another example application of the elastic member,

### DETAILED DESCRIPTION OF THE PREFERRED EMBODIMENTS

A straddled vehicle according to an embodiment includes: an engine; a rear wheel; and a chain. The rear wheel is located rearward of the engine. The chain transmits driving power from the engine to the rear wheel. The rear wheel includes an axle, a wheel hub, a plurality of bearings, an annular member, a sprocket, an elastic member, and a damping mechanism. The axle extends in the left-to-right direction with respect to the vehicle. The wheel hub is shaped as a cylinder that extends in the left-to-right direction with respect to the vehicle. The axle is inserted through the wheel hub. The plurality of bearings are located between the wheel hub and the axle as determined along a radial direction of the wheel hub. The plurality of bearings rotatably support the wheel hub on the axle. The annular member is attached to an end of the wheel hub as determined along the axial direction thereof. The annular member is positioned to be coaxial with the wheel hub. The annular member is positioned to be rotatable relative to the wheel hub in a circumferential direction of the wheel hub. The sprocket is coupled to the annular member. The chain is wound around the sprocket. When the annular member rotates relative to the wheel hub, the elastic member elastically deforms depending on the amount of rotation of the annular member relative to the wheel hub. The annular member rotates relative to the wheel hub when driving power is transmitted to the annular member via the sprocket. The damping mechanism damps a vibration in one of the annular member and the wheel hub after the annular member has rotated relative to the wheel hub. The vibration to be damped by the damping mechanism is a vibration acting to rotate one of the annular member and the wheel hub relative to the other in a circumferential direction with respect to their positions after the rotation of the annular member relative to the wheel hub.

In the above-described straddled vehicle, the driving power transmitted from the engine via the chain rotates the sprocket. The sprocket is coupled to the annular member. Thus, as the sprocket rotates, the annular member rotates. The annular member is positioned to be rotatable relative to the wheel hub. Thus, when the sprocket begins to rotate, the annular member rotates relative to the wheel hub. At this moment, the elastic member elastically deforms. This will reduce impacts produced when the annular member rotates relative to the wheel hub.

The relative rotation of the annular member relative to the wheel hub is restricted by the elastic member. Thus, the annular member is held by the elastic member at the position of the annular member after its rotation relative to the wheel hub. That is, the force that causes the elastic member to elastically deform and the biasing force generated by this elastic deformation are in balance. In this state, the rotation of the annular member is transmitted to the wheel hub via the elastic member. Thus, the annular member and wheel hub rotate while keeping their balanced position. As a result, the straddled vehicle travels.

When the straddled vehicle is travelling, the driving power transmitted to the rear wheel via the chain may vary. Further, for some road conditions, movements are directly transmitted to the rear wheel. These variations/movements cause vibrations in the rear wheel. More specifically, vibrations are produced in the rear wheel that cause one of the annular member and wheel hub to rotate relative to the other with respect to their positions after the rotation of the annular member relative to the wheel hub.

In the above-described straddled vehicle, the rear wheel includes a damping mechanism. This will damp vibrations in the rear wheel (more specifically, vibrations that cause one of the annular member and wheel hub to rotate relative to the other with respect to their positions after the rotation of the annular member relative to the wheel hub).

Preferably, the damping mechanism damps the vibration using a viscous fluid enclosed between the annular member and the wheel hub. In such implementations, the damping of the vibration by the damping mechanism may be achieved using the shear resistance of the viscous fluid produced when one of the annular member and the wheel hub rotates relative to the other, or using the flow resistance of the viscous fluid produced when one of the annular member and wheel hub rotates relative to the other.

Preferably, a wall is provided on one of the wheel hub and the annular member and a groove is provided on the other one of the wheel hub and annular member. The wall protrudes in the axial direction toward the other one of the wheel hub and the annular member, and extends in a circumferential direction. The groove is open toward the one of the wheel hub and the annular member to face in the axial direction, and extends in the circumferential direction. The wall is received by the groove and is permitted to move in a circumferential direction. A gap is provided between the inner surface of the groove and a side of the wall as determined along a radial direction of the wheel hub. The gap is filled with the viscous fluid. The size of the gap is smaller than the thickness of the wall as measured in a radial direction.

This arrangement achieves a damping mechanism using the shear resistance of the viscous fluid. The number, height and circumferential dimension of the walls is decided depending on the desired damping characteristics. The same applies to the number, depth and circumferential dimension of the grooves.

Preferably, the wall and the groove extend over the entire circumference. In such implementations, the circumferential dimensions of the wall and groove are relatively large. This increases the area of the side of the wall and the area of the portion of the inner surface of the groove that faces the side of the wall as determined along the radial direction of the wheel hub. This will provide large damping forces.

In other implementations, the wall may not extend over the entire circumference but the groove may extend over the entire circumference. In such implementations, too, the circumferential dimension of the wall and the height of the wall (i.e. axial dimension) may be decided appropriately to provide the desired damping characteristics.

Preferably, a plurality of walls and a plurality of grooves are arranged in a radial direction. In such implementations, the number of the walls and grooves are increased. This increases the total area of the sides of the walls and the total area of the side portions of the inner surfaces of the grooves that face the sides of the walls as determined along the radial direction of the wheel hub. This will provide large damping forces.

Preferably, the wall and the groove are located radially outward of the elastic member. In such implementations, the circumferential dimensions of the wall and groove are increased. This increases the area of the side of the wall and the area of the side portion of the inner surface of the groove that faces the side of the wall as determined along a radial direction of the wheel hub. This will provide large damping forces.

Preferably, the rear wheel further includes a seal ring. The seal ring is located between the annular member and the wheel hub. The seal ring may be located between the annular member and wheel hub as determined along the axial direction, or may be located between the annular member and wheel hub as determined along a radial direction. The seal ring is positioned to be coaxial with the wheel hub. The seal ring seals in the viscous fluid between the annular member and wheel hub.

In such implementations, the viscous fluid can be held between the annular member and wheel hub. This will stabilize the damping of vibrations by the damping mechanism.

When one of the annular member and wheel hub rotates relative to the other, friction is generated between the seal ring and annular member and between the seal ring and wheel hub. Such friction acts as a resistance that prevents the rotation of one of the annular member and wheel hub relative to the other. This will reduce the rotation of one of the annular member and wheel hub relative to the other.

Preferably, at least one of the elastic member and damping mechanism overlaps one of the plurality of bearings as viewed in a direction perpendicular to the axial direction. In such implementations, the one of the elastic member and damping mechanism that overlaps one of the bearings as viewed in a direction perpendicular to the axial direction is less likely to be affected by a load input into the rear wheel (more specifically, wheel hub) in a direction perpendicular to the axial direction.

Preferably, one of the wheel hub and the annular member includes a cylindrical outer periphery extending in the axial direction and the other one of the wheel hub and the annular member includes a cylindrical inner periphery extending in the axial direction. The inner periphery is located radially outward of the outer periphery. The inner periphery overlaps the outer periphery as viewed in a radial direction. The rear wheel further includes a bush. The bush is located between the outer periphery and the inner periphery and shaped as a cylinder extending in the axial direction.

In such implementations, the bush maintains the distance between the outer and inner peripheries (i.e. distance in a radial direction) at an appropriate level. As a result, the annular member can be maintained at an appropriate radial position relative to the wheel hub.

Preferably, the spring characteristics of the elastic member in the direction of rotation of the annular member relative to the wheel hub during deceleration of the straddled vehicle are softer than the spring characteristics thereof in the direction of rotation of the annular member relative to the wheel hub during acceleration of the straddled vehicle.

The driving power of the engine transmitted to the elastic member as the annular member rotates relative to the wheel hub may be driving power during acceleration of the straddled vehicle (i.e. positive driving power) and driving power during deceleration of the straddled vehicle (i.e. negative driving power). The absolute value of the driving power during acceleration of the straddled vehicle is larger than the absolute value of the driving power during deceleration of the straddled vehicle. Thus, the spring characteristics described above will facilitate relative rotation of the annular member relative to the wheel hub even when the straddled vehicle is decelerating. As a result, the vibration damping effect can be easily obtained even when the straddled vehicle is decelerating. Further, when the straddled vehicle is accelerating, the impact absorption effect desired when the annular member rotates relative to the wheel hub can be provided.

The elastic member may be formed from a material capable of elastically deforming when one of the annular member and wheel hub rotates relative to the other. The elastic member may be formed from, for example, rubber or resin elastomer.

The straddled vehicle according to an embodiment will be described below with reference to the drawings. In the present embodiment, a motorcycle will be described as an example of the straddled vehicle. The same or corresponding portions in the drawings are labeled with the same reference characters and their description will not be repeated.

In the following description, the forward and rearward directions, the left and right directions and the up and down directions are those as viewed from the rider sitting on the seat of the motorcycle. The axial, radial and circumferential directions are those with respect to the central axis of the axle of the rear wheel. That is, axial direction means the direction in which the central axis of the axle of the rear wheel extends. Radial direction means a direction perpendicular to the central axis of the axle of the rear wheel, i.e. a direction perpendicular to the axial direction. Circumferential direction means a direction about the central axis of the axle of the rear wheel. In the drawings referred to in the following description, arrow F indicates the forward direction with respect to the vehicle, arrow U indicates the upward direction with respect to the vehicle, and arrow L indicates the left direction with respect to the vehicle.

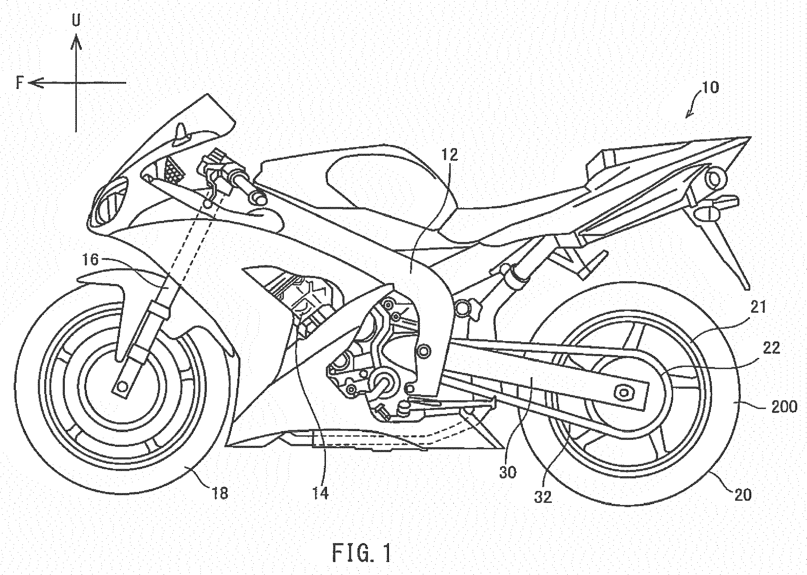

FIG. 1 is a schematic left side view of a motorcycle 10. Referring to FIG. 1, the motorcycle 10 includes an engine 14, a rear wheel 20, and a chain 32.

The engine 14 is supported on the vehicle-body frame 12. A front fork 16 is attached to a front portion of the vehicle-body frame 12. The front fork 16 rotatably supports the front wheel 18.

A pair of rear arms 30, to the left and right, are attached to the vehicle-body frame 12. The left and right rear arms 30 rotatably support the rear wheel 20.

The rear wheel 20 is located rearward of the engine 14. Driving power of the engine 14 is transmitted to the rear wheel 20 via the chain 32. This causes the rear wheel 20 to rotate.

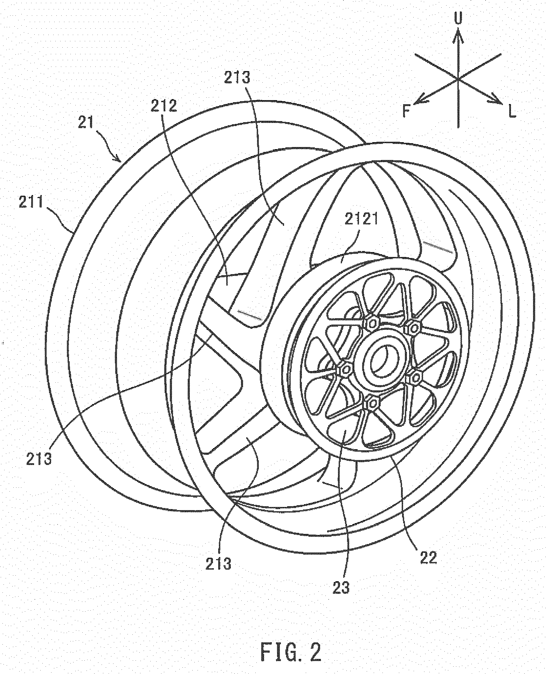

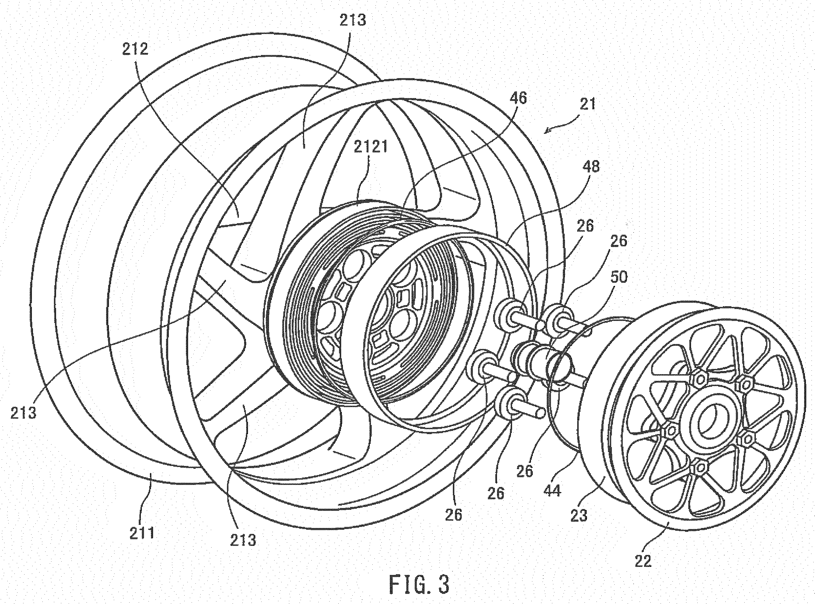

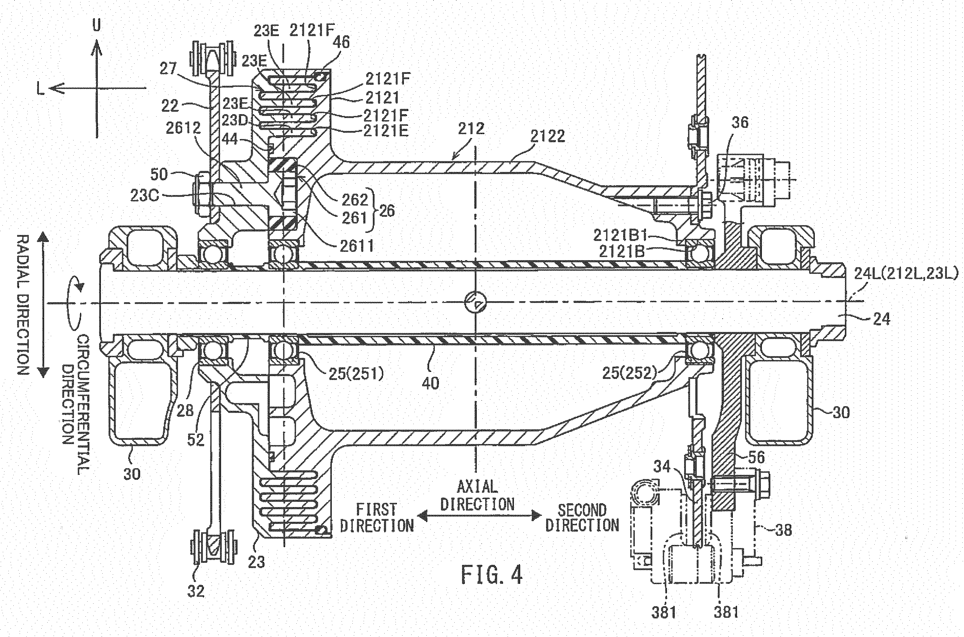

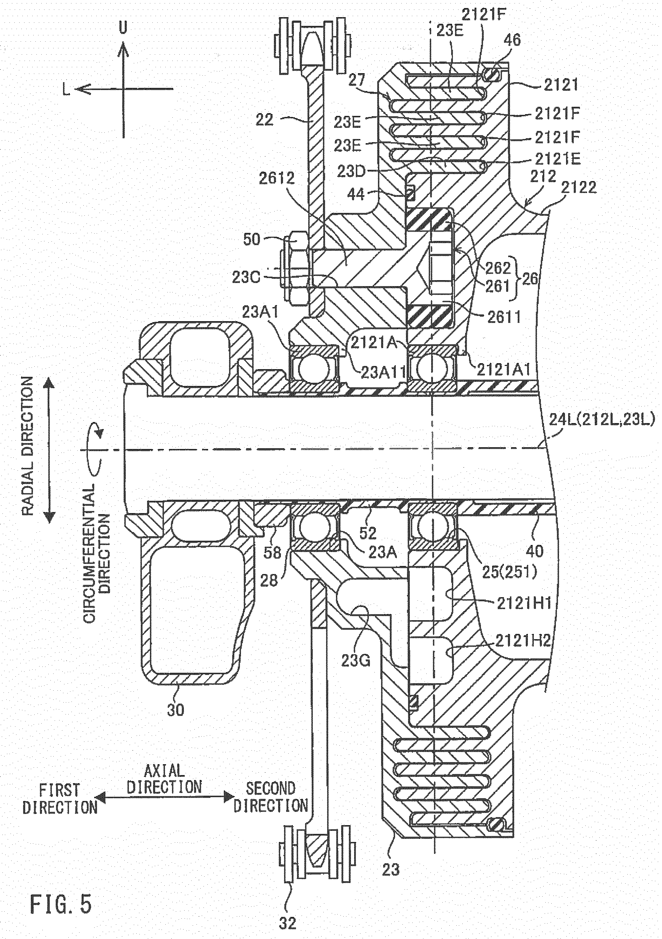

The rear wheel 20 of the motorcycle 10 will be described with reference to FIGS. 2, 3, 4 and 5. FIG. 2 is a perspective view of the rear wheel 20. FIG. 3 is an exploded perspective view of the rear wheel 20. FIG. 4 is a cross-sectional view of the rear wheel 20. FIG. 5 is an enlarged cross-sectional view of a portion of FIG. 4. FIGS. 2 and 3 do not show the tire 200 (see FIG. 1) and axle (see FIG. 4) mounted on the wheel body 21. FIGS. 4 and 5 do not show the tire 200 (see FIG. 1), rim 211 and spokes 213.

The rear wheel 20 includes a wheel body 21, a sprocket 22, an annular member 23, an axle 24, a plurality of (two in the present embodiment) bearings 25, a plurality of (five in the present embodiment) coupling members 26, seal rings 44 and 46, and a bush 48. These components will be described below.

The wheel body 21 will be described with reference to FIGS. 2 and 3. The wheel body 21 includes a rim 211, a wheel hub 212, and a plurality of spokes 213.

The tire 200 (see FIG. 1) is attached to the rim 211. The rim 211 has the shape of a cylinder having a central axis constituted by an axis extending in the left-to-right direction (more specifically, central axis 24L of the axle 24).

The wheel hub 212 is located radially inward of the rim 211. The wheel hub 212 is positioned to be coaxial with the rim 211. The wheel hub 212 is integral with the rim 211. The wheel hub 212 will be described in more detail further below.

The spokes 213 are located between the wheel hub 212 and rim 211. The spokes 213 connect the wheel hub 212 with the rim 211.

The axle 24 will be described with reference to FIG. 4. The axle 24 extends in the left-to-right direction to connect the left and right rear arms 30. That is, the central axis 24L of the axle 24 extends in the left-to-right direction. The axle 24 is formed of a metal. The metal may be, for example, a chromium-molybdenum steel (SCM 435, for example). The axle 24 is inserted into the wheel hub 212.

The wheel hub 212 will be described with reference to FIG. 4. The wheel hub 212 as a whole has the shape of a cylinder having a central axis extending in the left-to-right direction. The wheel hub 212 is positioned to be coaxial with the axle 24. That is, the central axis 212L of the wheel hub 212 matches the central axis 24L of the axle 24. Thus, the axial, radial and circumferential directions of the wheel hub 212 are the same as the axial, radial and circumferential directions of the axle 24. The wheel hub 212 is located between the rear arms 30. That is, the axle 24 extends through the wheel hub 212.

The wheel hub 212 is formed of a metal. The metal may be, for example, an aluminum alloy or magnesium alloy. The wheel hub 212 includes a cylindrical portion 2122 and an annular portion 2121.

The cylindrical portion 2122 as a whole has the shape of a cylinder having a central axis constituted by the central axis 212L. The outer and inner diameters of the left end of the cylindrical portion 2122 are larger than the inner and outer diameters of the right end of the cylindrical portion 2122.

An inner periphery 2121B is provided on the right end of the cylindrical portion 2122. The inner periphery 2121B is a cylindrical surface having a central axis constituted by the central axis 212L. The inner periphery 2121B extends straight in the axial direction with a generally constant diameter.

A stop 2121B1 is provided at the left end of the inner periphery 2121B. The stop 2121B1 protrudes from the inner periphery 2121B radially inwardly. The stop 2121B1 extends over the entire circumference.

A disk rotor 34 is fixed to the right end of the cylindrical portion 2122 by a plurality of bolts 36. An operation by the rider causes a brake pad 381 provided on a brake caliper 38 to be pressed onto the disk rotor 34. This reduces the rotational speed of the rear wheel 20.

The brake caliper 38 is attached to a support member 56 into which the axle 24 is inserted. The support member 56 is located between the right rear arm 30 and cylindrical portion 2122 as determined along the axial direction.

As shown in FIG. 5, the annular portion 2121 is connected to the left end of the cylindrical portion 2122. The annular portion 2121 as a whole has the shape of a ring having a central axis constituted by the central axis 212L.

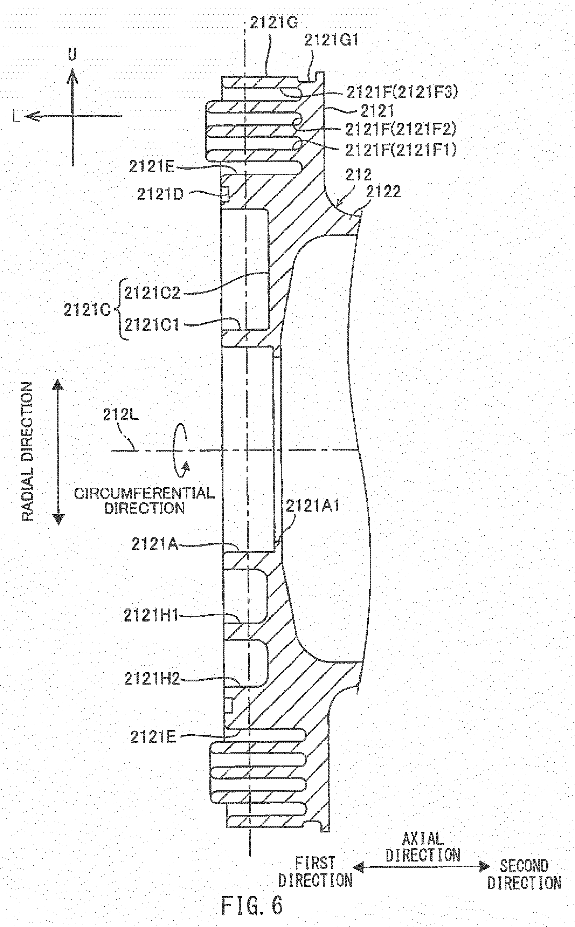

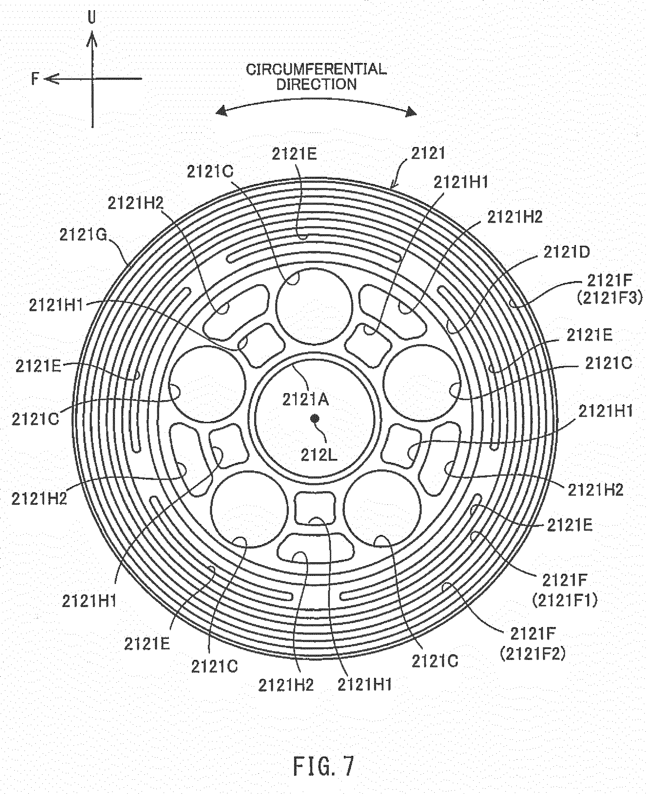

The annular portion 2121 will be described with reference to FIGS, 6 and 7. FIG. 6 is an enlarged cross-sectional view of the annular portion 2121. FIG. 7 is an end-side view of the annular portion 2121 as viewed from the left (i.e. in a first axial direction).

As shown in FIG. 6, the annular portion 2121 includes an inner periphery 2121A extending in the axial direction. The inner periphery 2121A is a cylindrical surface having a central axis constituted by the central axis 212L. The inner periphery 2121A extends straight in the axial direction with a generally constant diameter. The inner periphery 2121A is located radially inward of the left end of the cylindrical portion 2122.

A stop 2121A1 is provided at the right end of the inner periphery 2121A. The stop 2121A1 protrudes from the inner periphery 2121A radially inwardly. The stop 2121A extends over the entire circumference. That is, the stop 2121A has the shape of a ring.

As shown in FIG. 7, the annular portion 2121 includes a plurality of (five in the present embodiment) recesses 2121C. The recesses 2121C have the same shape and size.

The recesses 2121C are located radially outward of the inner periphery 2121A. The recesses 2121C overlap the inner periphery 2121A as viewed in a radial direction.

The recesses 2121C are located along a circle having its center on the central axis 212L. The recesses 2121C are separated by an equal distance as measured in the circumferential direction.

As shown in FIG. 6, the recesses 2121C are open toward the left (i.e. in the first axial direction). Each of the recesses 2121C includes a side 2121C1 and an end surface 2121C2.

The side 2121C1 extends straight in the axial direction with a generally constant diameter. That is, the side 2121C1 is a cylindrical surface extending in the axial direction.

As viewed in an axial direction, the end surface 2121C2 is circular in shape. The periphery of the end surface 2121C2 is connected with the right end of the side 2121C1.

As shown in FIG. 7, a groove 2121D is provided on the annular portion 2121. The groove 2121D has the shape of a ring having a central axial constituted by the central axis 212L. The groove 2121D extends in the circumferential direction with a generally constant width (i.e. radial dimension). The groove 2121D extends over the entire circumference. The groove 2121D is located radially outward of the recesses 2121C.

As shown in FIG. 6, the groove 2121D is open toward the left (i.e. in the first axial direction). The width (i.e. radial dimension) of the groove 2121D is larger than the depth (i.e. axial dimension) of the groove 2121D. The depth (i.e. axial dimension) of the groove 2121D is smaller than the depth (i.e. axial dimension) of the recesses 2121C.

As shown in FIG. 7, a plurality of (four in the present embodiment) grooves 2121E are provided on the annular portion 2121. The grooves 2121E have the same shape and size.

As shown in FIG. 6, the grooves 2121E are open toward the left (i.e. in the first axial direction). The depth (i.e. axial dimension) of the grooves 2121E is larger than the depth (i.e. axial dimension) of the recesses 2121C. The width of the grooves 2121E are sufficiently smaller than the depth of the grooves 2121E.

As shown in FIG. 7, the grooves 2121E are located radially outward of the groove 2121D. The grooves 2121E are located along a circle having its center on the central axis 212L. The grooves 2121E are separated by an equal distance as measured in the circumferential direction. The grooves 2121E are located at the same positions as the recesses 2121C as determined along the circumferential direction.

The grooves 2121E extend in the circumferential direction with a generally constant width (i.e. radial dimension). The length of each groove 2121E as measured in the circumferential direction is smaller than 1/5 of the circumference of the circle on which the grooves 2121E are located.

As shown in FIG. 7, a plurality of (three in the present embodiment) grooves 2121F are provided on the annular portion 2121. The grooves 2121F are located radially outward of the grooves 2121E. Each of the grooves 2121F has the shape of a ring having a central axis constituted by the central axis 212L.

The grooves 2121F are arranged in a radial direction. The grooves 2121F are separated by an equal distance as measured in a radial direction. That is, the grooves 2121F are positioned to be coaxial.

Each of the grooves 2121F extends in the circumferential direction with a generally constant width (i.e. radial dimension). Each of the grooves 2121F extends over the entire circumference. The grooves 2121F have the same width.

As shown in FIG. 6, the side walls defining a groove 2121F (i.e. two side walls adjacent as determined along a radial direction) each have the shape of a cylinder having a central axis constituted by the central axis 212L. That is, the side walls defining a groove 2121F (i.e. two side walls adjacent as determined along a radial direction) each extend straight in the axial direction with generally constant inner and outer diameters.

Each of the sides defining the two ends of the width of a groove 2121F (i.e. sides facing each other and arranged in a radial direction) is a cylindrical surface having a central axis constituted by the central axis 212L. That is, the sides defining the two ends of the width of a groove 2121F (i.e. sides facing each other and arranged in a radial direction) each extend straight in the axial direction with a generally constant diameter.

The grooves 2121F are open toward the left (i.e. in the first axial direction). The width (i.e. radial dimension) of the grooves 2121F is smaller than the depth (i.e. axial dimension) of the grooves 2121F. Preferably, the width of the grooves 2121F is not larger than 1/2 of the depth of the grooves 2121F. More preferably, the width of the grooves 2121F is not larger than 1/5 of the depth of the grooves 2121F. Yet more preferably, the width of the grooves 2121F is not larger than 1/10 of the depth of the grooves 2121F.

The depth (i.e. axial dimension) of the grooves 2121F is larger than the depth (i.e. axial dimension) of the recesses 2121C. The depth (i.e. axial dimension) of the one of the grooves 2121F that is located radially outermost, 2121F3, is generally equal to the depth (i.e. axial dimension) of the grooves 2121E. The depth (i.e. axial dimension) of the one of the grooves 2121F that is located radially innermost, 2121F1, is larger than the depth (i.e. axial dimension) of the grooves 2121E. The depth (axial dimension) of the one of the grooves 2121F that is located between the grooves 2121F1 and 2121F3 as determined along a radial direction, 2121F2, is larger than the depth (i.e. axial dimension) of the grooves 2121E. The depth (i.e. axial dimension) of the groove 2121F1 is generally equal to the depth (i.e. axial dimension) of the groove 2121F2.

The bottoms of the grooves 2121F are located generally at the same position as the bottoms of the grooves 2121E as determined along the axial direction. The open end of the groove 2121F3 is located generally at the same position as the open ends of the grooves 2121E as determined along the axial direction. The open end of the groove 2121F1 is located generally at the same position as the open end of the groove 2121F2 as determined along the axial direction. The open ends of the grooves 2121F1 and 2121F2 are located toward the left of (i.e. further in the first axial direction than) the open ends of the grooves 2121E.

As shown in FIG. 6, the annular portion 2121 includes an outer periphery 2121G. The outer periphery 2121G is a cylindrical surface having a central axis constituted by the central axis 212L. The outer periphery 2121G extends straight in the axial direction with a generally constant diameter.

A groove 2121G1 is provided on the outer periphery 2121G. The groove 2121G1 has the shape of a ring having a central axis constituted by the central axis 212L.

The groove 2121G1 extends in the circumferential direction with a generally constant width (i.e. axial dimension). The groove 2121G1 extends over the entire circumference. The groove 2121G1 is open radially outwardly.

In the implementation shown in FIG. 6, the outer periphery of the portion of the annular portion located to the right of (i.e. further in a second axial direction than) the groove 2121G1 (i.e. portion forming the right side wall of the groove 2121G) has a larger diameter than the outer periphery 2121G. The groove 2121G1 is located adjacent the right end (i.e. furthermost end in the second axial direction) of the outer periphery 2121G.

The groove 2121G1 is located to the right of (i.e. further in the second axial direction than) the recesses 2121C as viewed in a radial direction. The groove 2121G1 overlaps the bottoms of the grooves 2121F as viewed in a radial direction.

As shown in FIG. 7, the annular portion 2121 includes lightening recesses 2121H1 and 2121H2, each located between two recesses 2121C adjacent as determined along the circumferential direction. The associated ones of the recesses 2121H1 and 2121H2 are arranged in a radial direction. Providing the recesses 2121H1 and 2121H2 reduces the weight of the annular portion 2121C, i.e. wheel hub 212.

As shown in FIG. 4, the wheel hub 212 with this construction is rotatably supported by the bearings 25 on the axle 24. The bearings 25 will be described with reference to FIG. 4. Each of the bearings 25 is located between the wheel hub 212 and axle 24 as determined along a radial direction.

More specifically, the left one of the bearings 25, 251, is located between the left end of the wheel hub 212 (more specifically, inner periphery 2121A of the annular portion 2121) and the axle 24.

As viewed in a radial direction, the bearing 251 overlaps the recesses 2121C. As viewed in a radial direction, the bearing 251 overlaps the grooves 2121F.

The right one of the bearing 25, 252, is located between the right end of the wheel hub 212 (more specifically, inner periphery 2121B of the right end of the cylindrical portion 2122) and the axle 24. The bearing 252 is in contact with the stop 2121B1 provided at the left end of the inner periphery 2121B and with the support member 56 supporting the brake caliper 38 such that the stop, bearing and support member are arranged in the axial direction. The support member 56 is in contact with the bearing 252 and with the right rear arm 30 such that the bearing, support member and right rear arm are arranged in the axial direction.

In the present embodiment, a collar 40 is positioned between the bearings 25 and axle 24. The collar 40 as a whole has the shape of a cylinder extending straight in the axial direction. The axle 24 is inserted into the collar 40. The collar 40 determines the separation (i.e. distance as measured in the axial direction) between the bearings 251 and 252.

As shown in FIG. 5, the annular member 23 is attached to the left end (i.e. furthermost end in the first axial direction) of the wheel hub 212. The annular member 23 is formed of a metal. The metal may be, for example, an aluminum alloy or magnesium alloy.

The annular member 23 has the shape of a ring having a central axis extending in the left-to-right direction. The axle 24 is inserted into the annular member 23. The annular member 23 is positioned to be coaxial with the axle 24. That is, the central axis 23L of the annular member 23 matches the central axis 24L of the axle 24. Thus, the axial, radial and circumferential directions of the annular member 23 are the same as the axial, radial and circumferential directions of the axle 24.

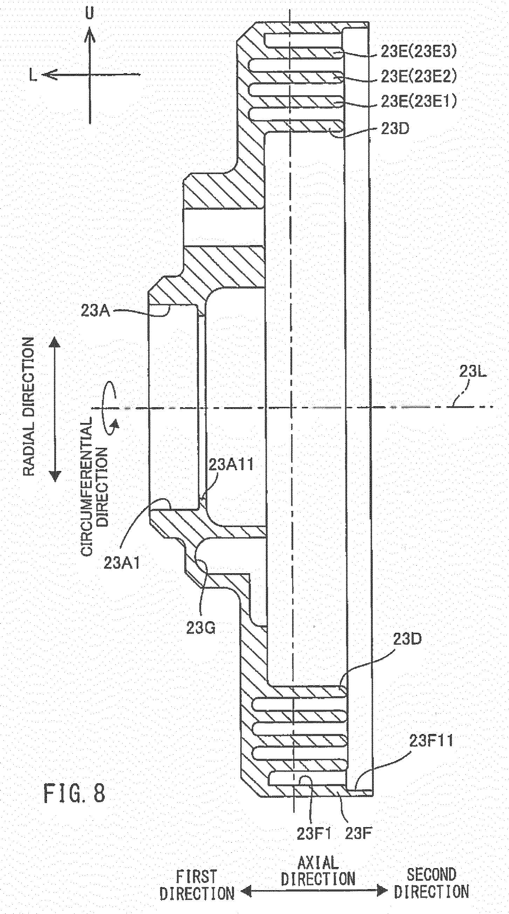

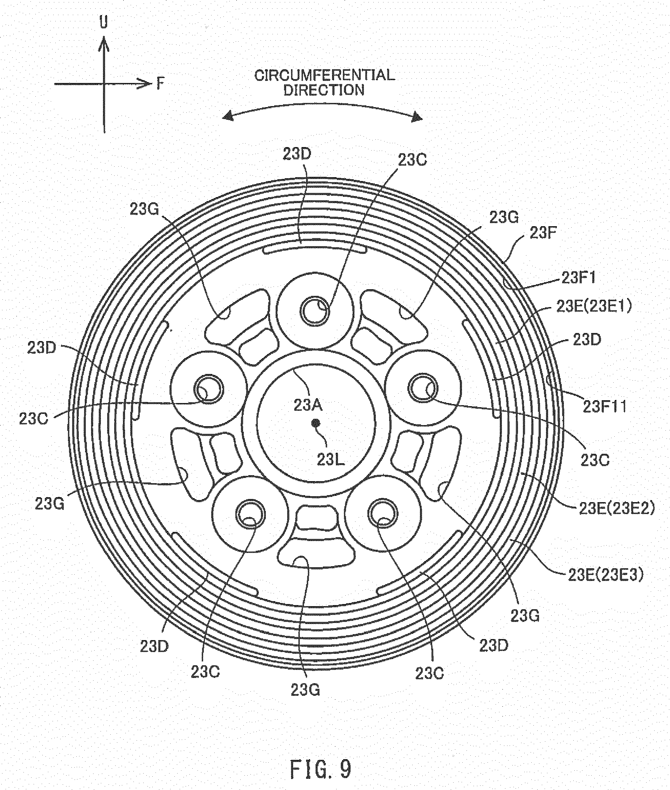

The annular member 23 will now be described with reference to FIGS. 8 and 9. FIG. 8 is an enlarged cross-sectional view of the annular member 23. FIG. 9 is an end-side view of the annular member 23 as viewed from the right (i.e. in the second axial direction).

As shown in FIG. 8, the annular member 23 has an inner periphery 23A. The inner periphery 23A, as a whole, is a cylindrical surface having a central axis constituted by the central axis 23L.

A support surface 23A1 is provided at the left end of the inner periphery 23A. The support surface 23A1 extends straight in the axial direction with a generally constant diameter. A stop 23A11 is provided at the right end of the support surface 23A1. The stop 23A11 protrudes from the support surface 23A1 radially inward. The stop 23A11 extends over the entire circumference.

As shown in FIG. 9, a plurality of (five in the present embodiment) holes 23C are provided on the annular member 23. The holes 23C have the same shape and size.

As shown in FIG. 8, the holes 23C extend through the annular member 23 in the axial direction. The holes 23C extend straight in the axial direction with a generally constant diameter. The inner surface of each hole 23C is a cylindrical surface extending straight in the axial direction.

As shown in FIG. 9, the holes 23C are located radially outward of the inner periphery 23A. The holes 23C are located along a circle having its center on the central axis 23L. The holes 23C are separated by an equal distance as measured in the circumferential direction.

As shown in FIG. 9, a plurality of (four in the present embodiment) walls 23D are provided on the annular member 23. The walls 23D have the same shape and size.

The walls 23D are located radially outward of the holes 23C. The walls 23D are located along a circle having its center on the central axis 23L. The walls 23D are separated by an equal distance as measured in the circumferential direction. The walls 23D are located at the same positions as the holes 23C as determined along the circumferential direction.

The walls 23D extend in the circumferential direction with a generally constant width (i.e. radial dimension). The circumferential dimension of each wall 23D is smaller than 1/5 of the circumference of the circle on which the walls 23D are located.

Each of the walls 23D is located at the same position as one of the holes 23C as determined along the circumferential direction. That is, one wall 23D and one hole 23C are arranged in a radial direction.

As shown in FIG. 8, the walls 23D protrude toward the right (i.e. in the second axial direction). The width of the walls 23D is sufficiently smaller than the height of the walls 23D.

As shown in FIG. 9, a plurality of (three in the present embodiment) walls 23E are provided on the annular member 23. The walls 23E are located radially outward of the walls 23D. Each of the walls 23E has the shape of a cylinder having a central axis constituted by the central axis 23L of the annular member 23.

The walls 23E are arranged in a radial direction. The walls 23E are separated by an equal distance as measured in a radial direction. That is, the walls 23E are positioned to be coaxial.

The walls 23E extend in the circumferential direction with a generally constant width (i.e. radial dimension). The walls 23E extend over the entire circumference. The walls 23E have the same width.

As shown in FIG. 8, each of the inner and outer peripheries of a wall 23E is a cylindrical surface having a central axis constituted by the central axis 23L. That is, the inner and outer peripheries of each wall 23E extend straight in the axial direction with generally constant inner and outer diameters, respectively.

The walls 23E protrude toward the right (i.e. in the second axial direction). The width (i.e. radial dimension) of each wall 23E is smaller than the height (i.e. axial dimension) of the walls 23E. Preferably, the width of each wall 23E is not larger than 1/2 of the height of the walls 23E. More preferably, the width of each wall 23E is not larger than 1/5 of the height of the walls 23E. Yet more preferably, the width of each wall 23E is not larger than 1/10 of the height of the walls 23E.

The height (i.e. axial dimension) of the one of the walls 23E that is located outermost as determined along a radial direction, 23E3, is generally equal to the height (i.e. axial dimension) of the walls 23D. The height (axial dimension) of the one of the walls 23E that is located innermost as determined along a radial direction, 23E1, is larger than the height (axial dimension) of the walls 23D. The height (axial dimension) of the one of the walls 23E that is located between the walls 23E1 and 23E3 as determined along a radial direction (this wall will be denoted as "23E2") is larger than the height (i.e. axial dimension) of the walls 23D. The height of the wall 23E2 is generally equal to the height of the wall 23E1.

The edges of the walls 23E are located generally at the same position as the edge of the walls 23D as determined along the axial direction. The base of the wall 23E3 is located generally at the same position as the base of the walls 23D as determined along the axial direction. The base of the wall 23E1 is located generally at the same position as the base of the wall 23E2 as determined along the axial direction. The base of the wall 23E1 and the base of the wall 23E2 are located to the left (further in the first axial direction) of the bases of the walls 23D and the base of the wall 23E3.

As shown in FIG. 8, the annular member 23 includes a wall 23F. The wall 23F is located radially outward of the walls 23E. The wall 23F has the shape of a cylinder having a central axis constituted by the central axis 23L of the annular member 23.

The wall 23F has an inner periphery 23F1. The inner periphery 23F1 is a cylindrical surface having a central axis constituted by the central axis 23L. The inner periphery 23F1 extends straight in the axial direction with a generally constant diameter.

The wall 23F includes a recess 23F11. The recess 23F11 has the shape of a ring having a central axis constituted by the central axis 23L.

The recess 23F11 is open at the inner periphery 23F1 and right end surface (i.e. surface of an end as determined along the axial direction) of the wall 23F. The recess 23F11 extends in the circumferential direction with a generally constant width (i.e. axial dimension). The recess 23F11 extends over the entire circumference. The recess 23F11 overlaps the edges of the walls 23E as viewed in a radial direction.

As shown in FIG. 9, the annular member 23 includes lightening recesses 23G, each located between two holes 23C adjacent as determined along the circumferential direction. Providing the recesses 23G reduces the weight of the annular member 23.

As shown in FIG. 5, the annular member 23 with this construction is rotatably supported on the axle 24 by means of a bearing 28. The bearing 28 will be described below with reference to FIG. 5.

The bearing 28 is included in the rear wheel 20. The bearing 28 is located between the annular member 23 (more specifically, support surface 23A1) and axle 24 as determined along a radial direction.

Further, the bearing 28 overlaps the sprocket 22 as viewed in a radial direction. The bearing 28 is in contact with the stop 23A11 of the support surface 23A1 and with a spacer 58 into which the axle 24 is inserted such that the stop, bearing and spacer are arranged in the axial direction. The spacer 58 is in contact with the bearing 28 and with the left rear arm 30 such that the bearing, spacer and left rear arm are arranged in the axial direction.

In the present embodiment, a collar 52 is provided between the bearing 28 and axle 24. The collar 52 has the shape of a cylinder extending straight in the axial direction. The axle 24 is inserted into the collar 52. The collar 52 determines the separation (i.e. distance as measured in the axial direction) between the bearing 251 and bearing 28.

In the present embodiment, the right end of the collar 52 is present between the bearing 251 and axle 24. The left end of the collar 52 is present between the spacer 58 and axle 24.

Thus, the annular member 23 is rotatably supported on the axle 24 by the bearing 28. Further, the annular member 23 is positioned to be coaxial with the wheel hub 212. The annular member 23 is in contact with the wheel hub 212 such that the annular member and wheel hub are arranged in the axial direction. The annular member 23 is rotatable in the circumferential direction relative to the wheel hub 212.

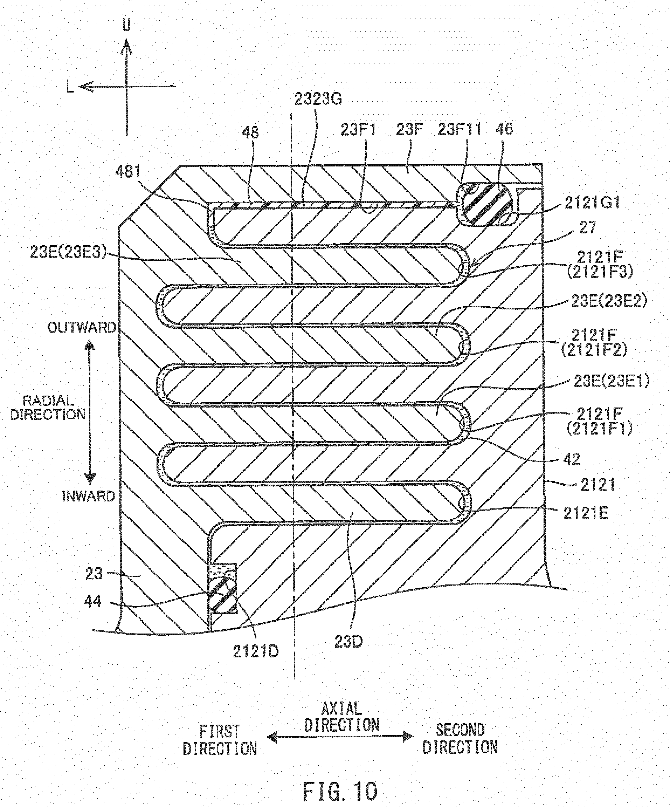

The relationship between the annular member 23 and wheel hub 212 (more specifically, annular portion 2121) will be described with reference to FIG. 10. FIG. 10 is an enlarged cross-sectional view of a portion of FIG. 5.

The walls 23D of the annular member 23 protrude toward the wheel hub 212. The grooves 2121E of the wheel hub 212 are open toward the annular member 23. Each of the walls 23D is received in the one of the grooves 2121E that is provided at the corresponding position determined along the circumferential direction. That is, one wall 23D is received in one groove 2121E.

A small gap is provided between the tip surface of a wall 23D and the bottom surface of the corresponding groove 2121E. That is, a small gap is provided between the surface of the wall 23D and the inner surface of the groove 2121E as determined along the axial direction. A small gap is provided between a side of the wall 23D and the associated side of the groove 2121E. That is, a small gap is provided between the surface of the wall 23D and the inner surface of the groove 2121E as determined along a radial direction. The circumferential dimension of the wall 23D is smaller than the circumferential dimension of the groove 2121E. This permits circumferential movement of the wall 23D inside the groove 2121E.

The walls 23E of the annular member 23 protrude toward the wheel hub 212. The grooves 2121F of the wheel hub 212 are open toward the annular member 23. Each of the walls 23E is received in the one of the grooves 2121F that is provided at the corresponding position determined along a radial direction.

A small gap is provided between the tip surface of a wall 23E and the bottom surface of the corresponding groove 2121F. That is, a small gap is provided between the surface of the wall 23E and the inner surface of the groove 2121F as determined along the axial direction. A small gap is provided between a side of the wall 23E and the associated side of the groove 2121F. That is, a small gap is provided between the surface of the wall 23E and the inner surface of the groove 2121F as determined along a radial direction. Each of the walls 23E and each of the grooves 2121F extend over the entire circumference. This permits circumferential movement of the walls 23E within the grooves 2121F.

The gap between a side of a wall 23E and the associated side of the corresponding groove 2121F is smaller than the gap between the tip surface of the wall 23E and the bottom surface of the groove 2121F. The gap between the side of the wall 23E and the side of the groove 2121F is smaller than the thickness (i.e. radial dimension) of the wall 23E. Preferably, the gap between the side of the wall 23E and the side of the groove 2121F is smaller than 1/2 of the thickness of the wall 23E. More preferably, the gap between the side of the wall 23E and the side of the groove 2121F is larger than 1/20 of the thickness of the wall 23E.

The gaps between the surfaces of the walls 23E and the inner surfaces of the grooves 2121F (i.e. radial gaps and axial gaps) are filled with a viscous fluid 42. The viscous fluid 42 may be a silicone grease, for example. The viscosity of the viscous fluid 42 is only required to be large enough to provide a damping effect derived from shear resistance, as discussed further below. The viscosity of the viscous fluid 42 may be 10000 centistokes (cSt) or larger, for example.

The seal ring 44 will be described with reference to FIG. 10. The seal ring 44 is formed of a rubber material. The rubber material may be a nitrile rubber (NBR), for example.

The seal ring 44 has the shape of a ring having a central axis constituted by the central axis 212L. The seal ring 44 is positioned in the groove 2121D formed in the wheel hub 212. That is, the seal ring 44 is positioned to be coaxial with the wheel hub 212.

When the annular member 23 is in contact with the wheel hub 212 such that the annular member and wheel hub are arranged in the axial direction, the opening of the groove 2121D is covered with the annular member 23. That is, the seal ring 44 is located between the annular member 23 and wheel hub 212 as determined along the axial direction. In this state, the seal ring 44 is compressed in the axial direction. As such, the seal ring 44 prevents the viscous fluid 42 from leaking from the groove 2121D radially inwardly. That is, the seal ring 44 seals in the viscous fluid 42 between the annular member 23 and wheel hub 212.

The relationship between the wall 23F and annular portion 2121 will be described with reference to FIG. 10. When the annular member 23 is in contact with the wheel hub 212 such that the annular member and wheel hub are arranged in the axial direction, the wall 23F of the annular member 23 is located radially outward of the annular portion 2121 of the wheel hub 212. The edge of the wall 23F is located generally at the same position as the rightmost position of the annular portion 2121 as determined along the axial direction. As viewed in a radial direction, the wall 23F overlaps the annular portion 2121. That is, the wall 23F covers the outer periphery 2121G of the annular portion 2121. The inner periphery 23F1 of the wall 23F is located radially outward of the outer periphery 2121G. A gap is provided between the inner periphery 23F1 of the wall 23F and the outer periphery 2121G of the annular portion 2121. In this state, the recess 23F11 in the inner periphery 23F1 overlaps the groove 2121G in the outer periphery 2121G as viewed in a radial direction.

The seal ring 46 will be described with reference to FIG. 10. The seal ring 46 is formed of a rubber material. The rubber material may be a nitrile rubber (NBR), for example.

The seal ring 46 has the shape of a ring having a central axis constituted by the central axis 212L. The seal ring 46 is located between the groove 2121G1 and recess 23F11. That is, the seal ring 46 is provided between the annular member 23 and wheel hub 212 as determined along a radial direction. In other words, the seal ring 46 is positioned to be coaxial with the wheel hub 212. In this state, the seal ring 46 is compressed in radial directions. As such, the seal ring 46 prevents the viscous fluid 42 from leaking to the right (i.e. in the second axial direction) from the groove 2121G1 and recess 23F11. That is, the seal ring 46 seals in the viscous fluid 42 between the annular member 23 and wheel hub 212.

The bush 48 will be described with reference to FIG. 10. The bush 48 is a thin oilless slide bearing. The bush 48 may be formed of, for example, a fluorine-based resin or a nylon-based resin. The bush 48 may be formed of a combination of such a resin with a metal (for example, copper).

The bush 48 is provided between the inner periphery 23F1 of the wall 23F of the annular member 23 and the outer periphery 2121G of the annular portion 2121. The bush 48, as a whole, has the shape of a cylinder having a central axis constituted by the central axis 23L. The bush 48 is located toward the left of the seal ring 46.

A stop 481 is provided on the left end (i.e. end as determined along the axial direction) of the bush 48. The stop 481 extends from the left end of the bush 48 radially inwardly. The stop 481 extends over the entire circumference. The stop 481 is in contact with the edge of the radially outward one of the walls defining the groove 2121F3 of the annular portion 2121 and with the annular member 23 such that the edge, stop and annular member are arranged in the axial direction. This determines the axial position of the bush 48. This prevents the bush 48 from moving in an axial direction and contacting the seal ring 46.

The coupling members 26 will be described with reference to FIG. 5. The coupling members 26 have the same shape and size.

Each of the coupling members 26 includes a body 261 and an elastic member 262. These components will be described below.

The body 261 is formed of a metal. The metal may be, for example, a chromium-molybdenum steel (SCM 435, for example). The body 261 includes a base 2611 and a stem 2612.

The base 2611 has the shape of a thick disc or a cylinder. The base 2611 has a cylindrical outer periphery extending straight in the axial direction with a generally constant diameter.

The stem 2612 has the shape of a cylinder with a smaller diameter than the base 2611. That is, the stem 2612 extends straight in the axial direction with a generally constant diameter. A thread is formed on the side of the tip of the stem 2612.

The stem 2612 protrudes from the left end of the base 2611 in the axial direction. The stem 2612 is formed to be coaxial with the base 2611.

The elastic member 262 is formed of a rubber material. The rubber material may be a nitrile rubber (NBR), for example. Alternatively, the elastic member 262 may be formed of a resin elastomer, for example. The resin elastomer may be polyurethane, for example.

The elastic member 262 has the shape of a ring having a central axis constituted by the central axis of the body 261. That is, the elastic member 262 extends straight in the axial direction with generally constant inner and outer diameters. The axial dimension of the elastic member 262 is generally equal to the axial dimension of the base 2611.

The inner periphery of the elastic member 262, over its entire axial dimension, is bonded to the outer periphery of the base 2611. In this state, the elastic member 262 covers the entire outer periphery of the base 2611.

The base 2611 and elastic member 262 of each coupling member 26 are received in the associated one of the recesses 2121C of the annular portion 2121. That is, the walls 23E of the annular member 23 and the grooves 2121F of the annular portion 2121 are located radially outward of the elastic members 262. As viewed in a radial direction, the elastic members 262 overlap the walls 23E and grooves 2121F. As viewed in a radial direction, the elastic members 262 overlap the bearing 251.

When the base 2611 and elastic member 262 are located in the recess 2121C, the side of the elastic member 262 is in contact with the side 2121C1 of the recess 2121C. In this state, the elastic member 262 may be compressed between the side 2121C1 of the recess 2121C and the outer periphery of the base 2611. In this case, the elasticity of the elastic member 262 may be used to bring the outer periphery of the elastic member 262 into close contact with the side 2121C1 of the recess 2121C.

When the annular member 23 is in contact with the wheel hub 212 such that they are arranged in the axial direction, the openings of the recesses 2121C in the annular portion 2121 are covered with the annular member 23. When the bases 261 and elastic members 262 are located in the recesses 2121C, the stems 2612 are inserted into the holes 23C in the annular member 23. The tips of the stems 2612 are located to the left of the holes 23C. That is, the tips of the stems 2612 are located outside the holes 23C. In this state, a portion of each stem 2612 that is located outside the associated hole 23C is inserted into a hole 221 formed in the sprocket 22. The tip of the stem 2612 is located to the left of the sprocket 22. That is, the stem 2612 extends through the sprocket 22. A nut 50 is fixed to a portion of the stem 2612 that is located to the left of the sprocket 22. Thus, the sprocket 22 is coupled to the annular member 23. The chain 32 is wound around the sprocket 22. Driving power from the engine 14 is transmitted to the sprocket 22 via the chain 32.

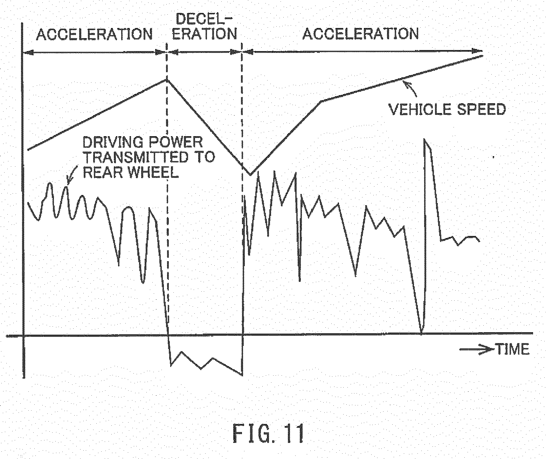

When the motorcycle 10 is travelling, driving power from the engine 14 is transmitted to the rear wheel 20 via the chain 32. FIG. 11 is a graph showing the driving power transmitted to the rear wheel 20. As shown in FIG. 11, the driving power transmitted to the rear wheel 20 constantly varies.

Factors behind the variations in the driving power include: throttle-lever operations by the rider, variations in the torque itself generated by the engine 14 (for example, variations caused by the unevenness of the combustion state), those produced in the route of transmission of driving power from the engine 14 to the rear wheel 20 (for example, those caused by the engagement of the gears of the transmission, or those caused by the vibration of the chain 22, for example), those caused by shocks generated by shift changes during acceleration and deceleration, and those caused by the engine brake during deceleration.

Further, the driving power transmitted to the rear wheel 20 may vary due to road surface conditions. For example, the conditions of the road surface itself (for example, unevenness of the pavement, cracks on the road surface, and bumps on the road surface), or changes in the friction between the road surface and rear wheel 20 (those caused by the wetness of the road surface, for example) may cause the driving power transmitted to the rear wheel 20 to vary.

The motorcycle 10 is capable of damping the vibration caused by the variations in the driving power transmitted to the rear wheel 20. This feature will be described below.

In the motorcycle 10, the driving power from the engine 14 is transmitted to the sprocket 22 via the chain 32. The sprocket 22 is coupled to the annular member 23 by means of the coupling members 26 and the nuts 50 attached to the coupling members 26. When the driving power from the engine 14 transmitted to the sprocket 22 via the chain 32 causes the sprocket 22 to begin to rotate, the annular member 23 rotates relative to the wheel hub 212 in the circumferential direction. At this moment, the elastic members 262 provided on the coupling members 26 are compressed. This will reduce impacts produced when the annular member 23 is rotating relative to the wheel hub 212 in the circumferential direction.

The annular member 23 is held by the coupling members 26 (more specifically, elastic members 262 and bases 2611) at the position of the annular member after its rotation relative to the wheel hub 212. In this state, the rotation of the annular member 23 is transmitted to the wheel hub 212 via the coupling members 26. This causes the annular member 23 to rotate together with the wheel hub 212. As a result, the motorcycle 10 travels.

While the motorcycle 10 is travelling, the driving power transmitted to the rear wheel 20 via the chain 32 may vary. Further, for some road surface conditions, movements may be directly transferred to the rear wheel 20. These variations/movements cause vibrations in the rear wheel 20. More specifically, vibrations are produced in the rear wheel that cause one of the annular member 23 and wheel hub 212 to rotate relative to the other with respect to their positions after the rotation of the annular member 23 relative to the wheel hub 212.

When one of the annular member 23 and wheel hub 212 circumferentially rotates relative to the other, the walls 23E circumferentially move within the grooves 2121F. At this moment, the shear resistance of the viscous fluid 42 filling the gaps between the sides of the walls 23E and the sides of the grooves 2121F absorbs energy that circumferentially rotates one of the annular member 23 and wheel hub 212 relative to the other (or disperses it in the form of heat). This will damp vibrations that rotate one of the annular member 23 and annular portion 2121 relative to the other.

That is, in the present embodiment, the walls 23E, grooves 2121F and viscous fluid 42 implement a damping mechanism 27. In short, the damping mechanism 27 uses the viscous fluid 42 filling the gap between the annular member 23 and annular portion 2121 to damp vibrations. The damping mechanism 27 overlaps the bearing 251 as viewed in a radial direction.

In the motorcycle 10, each of the walls 23E of the annular member 23 extends over the entire circumference. Each of the grooves 2121F of the wheel hub 212 extends over the entire circumference. Thus, the walls 23E and grooves 2121F have relatively large circumferential dimensions. Thus, the sides of the walls 23E and the portions of the inner surfaces of the grooves 2121F that face the sides of the walls 23E as determined along a radial direction have relatively large areas. This will increase the damping forces derived from the shear resistance of the viscous fluid 42.

In the motorcycle 10, the walls 23E of the annular member 23 are arranged in a radial direction. The grooves 2121F of the wheel hub 212 are also arranged in a radial direction. Thus, the numbers of the walls 23E and grooves 2121F are increased. Thus, the sides of the walls 23E and the portions of the inner surfaces of the grooves 2121F that face the sides of the walls 23E as determined along a radial direction as a whole have increased areas. This will increase the damping forces derived from the shear resistance of the viscous fluid 42.

In the motorcycle 10, the walls 23E of the annular member 23 are located radially outward of the elastic members 262. Further, the grooves 2121F of the wheel hub 212 are also located radially outward of the elastic members 262. Thus, the walls 23E and grooves 2121F have relatively large circumferential dimensions. Thus, the sides of the walls 23E and the portions of the inner surfaces of the grooves 2121F that face the sides of the walls 23E as determined along a radial direction have increased areas. This will increase the damping forces derived from the shear resistance of the viscous fluid 42.

In the motorcycle 10, when one of the annular member 23 and wheel hub 212 circumferentially rotates relative to the other, friction forces are produced between the seal rings 44 and 46 and annular member 23, and friction forces are produced between the seal rings 44 and 46 and wheel hub 212. When one of the annular member 23 and wheel hub 212 rotates relative to the other, these friction forces act as a resistance that prevents this relative rotation. This will prevent one of the annular member 23 and wheel hub 212 to rotate relative to the other.

In the motorcycle 10, the elastic members 262 and damping mechanism 27 overlap the bearing 251 as viewed in the radial direction. Thus, the elastic members 262 and damping mechanism 27 are unlikely to be affected by loads input into the rear wheel 20 in a radial direction.

In the motorcycle 10, a bush 48 is provided between the inner periphery 23F of the annular member 23 and the outer periphery 2121G of the annular portion 2121. Thus, the bush 48 maintains the separation (i.e. radial distance) between the outer periphery 2121G and inner periphery 23F at an appropriate level. This will maintain the annular member 23 at an appropriate radial position relative to the wheel hub 212.

### [Example Application of Damping mechanism]

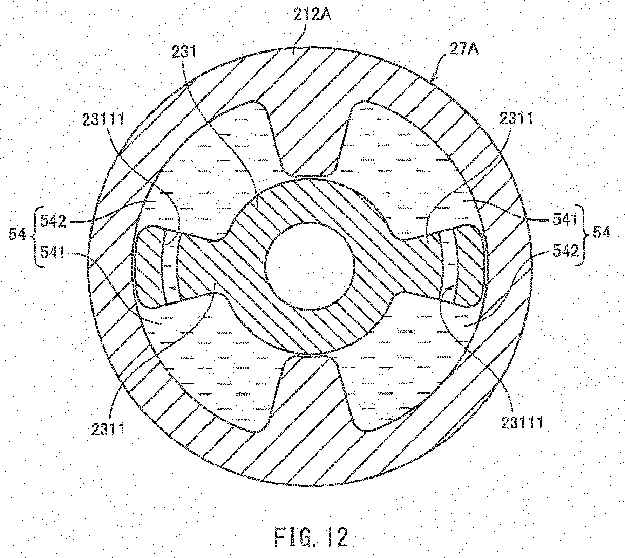

In the above embodiment, the shear resistance of the viscous fluid 42 is used to damp vibrations that circumferentially rotate one of the annular member 23 and wheel hub 212 relative to the other; alternatively, for example, vibrations may be damped using the circumferential flow of the viscous fluid produced when one of the annular member 23 and wheel hub 212 rotates relative to the other. One example will be described with reference to FIG. 12. FIG. 12 is only intended to illustrate an example application of the damping mechanism, and does not show the relationship between the damping mechanism and elastic members.

The damping mechanism 27A shown in FIG. 12 includes an annular member 231 having a pair of partition walls 2311. When one of the annular member 231 and wheel hub 212A rotates relative to the other, the partition walls 2311 move in a circumferential direction. The partition walls 2311 partition a fluid chamber 54 defined by the annular member 231 and wheel hub 212A into sub-chambers arranged in the circumferential direction. One of the sub-chambers, formed on one side of the partition wall 2311 as determined along the circumferential direction, will be referred to as fluid chamber 541. The other sub-chamber, formed on the other side of the partition wall 2311 as determined along the circumferential direction, will be referred to as fluid chamber 542. An orifice 23111 is formed in each of the partition walls 2311. Each orifice 23111 extends in the circumferential direction. The orifices 23111 allow the two fluid chambers 541 and 542 to communicate.

In the damping mechanism 27A having this construction, as the partition walls 2311 move in a circumferential direction, a difference in pressure is created in the viscous fluid 42 filling each of the two fluid chambers 541 and 542. As a result, the viscous fluid moves through the orifices 23111. The flow resistance thus produced is used to reduce vibrations that rotate one of the annular member 231 and wheel hub 212A relative to the other in a circumferential direction.

### [Example Applications of Elastic Member]

The spring characteristics of the elastic member 262 exhibited when the motorcycle 10 accelerates may be different from the spring characteristics in the direction in which the motorcycle decelerates.

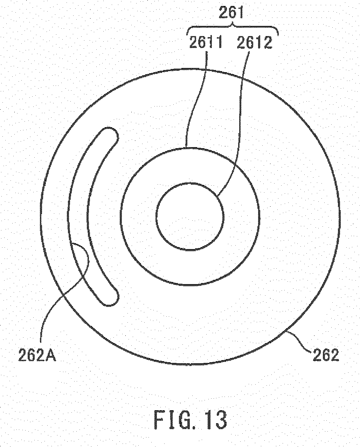

For example, as shown in FIG. 13, a slit 262A may be formed within a portion of the elastic member 262 that contacts the wheel hub 212 when the motorcycle 10 decelerates.

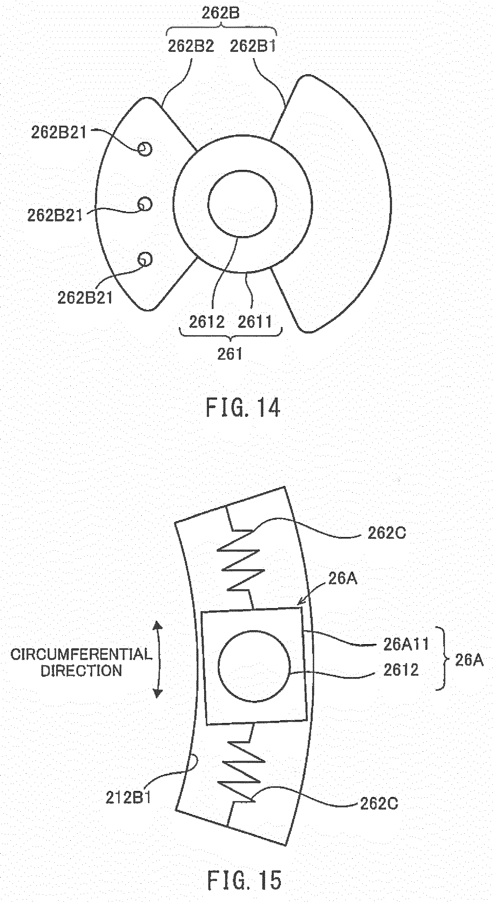

Alternatively, as shown in FIG. 14, an elastic member 262B may be composed of an elastic member 262B1 that contacts the wheel hub 212 when the motorcycle 10 is accelerates and an elastic member 262B2 that contacts the wheel hub 212 when the motorcycle 10 decelerates. In the implementation shown in FIG. 14, a plurality of (three in the implementation shown in FIG. 14) holes 262B21 are formed in the elastic member 262B2 to further facilitate deformation of the elastic member 262B2.

Alternatively, a portion of an elastic member that contacts the wheel hub 212 when the motorcycle 10 accelerates may be made of a certain material while a portion that contacts the wheel hub 212 when the motorcycle 10 decelerates may be made of a different material.

In such implementations, the spring characteristics exhibited when the motorcycle 10 decelerates are softer than the spring characteristics in the direction in which the motorcycle 10 accelerates. The driving power from the engine 14 transmitted to the elastic members when the annular member 23 rotates relative to the wheel hub 212 during acceleration of the motorcycle 10 is larger than that during deceleration of the motorcycle 10, Thus, the spring characteristics discussed above will facilitate relative rotation of the annular member 23 relative to the wheel hub 212 even during deceleration of the motorcycle 10. This will facilitate damping of vibrations even during deceleration of the motorcycle 10. When the motorcycle 10 is accelerating, impacts produced when the annular member 23 rotates relative to the wheel hub 212 can be reduced.

Alternatively, as shown in FIG. 15, the elastic member may be springs 262C. In the implementation shown in FIG. 15, the springs 262C are provided on both sides of the base 26A11 of the body 26A1 of the coupling member 26A as determined along the circumferential direction. The springs 262C and body 26A1 are positioned within a recess 212B1 formed in the wheel hub 212B. When the body 261A moves in a circumferential direction, one spring 262C is pulled while the other spring 262C is compressed. This will reduce impacts produced when the annular member 23 rotates relative to the wheel hub 212.

## Claims

1. A straddled vehicle comprising:
an engine (14);
a rear wheel (20) located rearward of the engine (14); and
a chain (32) for transmitting driving power from the engine (14) to the rear wheel (20),
the rear wheel (20) including:
an axle (24) extending in an axial direction in the left-to-right direction with respect to the vehicle, a radial direction is extending within a plane perpendicular with the axial direction;
a wheel hub (212) shaped as a cylinder that extends in the axial direction, the axle (24) being inserted through the wheel hub (212);
a plurality of bearings (25) located between the wheel hub (212) and the axle (24) as determined along a radial direction of the wheel hub (212), the plurality of bearings (25) rotatably supporting the wheel hub (212) on the axle (24);
an annular member (23) attached to an end of the wheel hub (212) as determined along the axial direction thereof and positioned to be coaxial with the wheel hub (212), the annular member (23) being positioned to be rotatable relative to the wheel hub (212) in a circumferential direction of the wheel hub (212) around the axial direction;
a sprocket (22) coupled to the annular member (23), the chain (32) being wound around the sprocket (22);
an elastic member (262, 262B, 262C), wherein, when the driving power is transmitted to the annular member (23) via the sprocket (22) and the annular member (23) rotates relative to the wheel hub (212), the elastic member (262, 262B, 262C) elastically deforms depending on the amount of rotation of the annular member (23) relative to the wheel hub (212); and
a damping mechanism (27) for damping a vibration in one of the annular member (23) and the wheel hub (212) after the annular member (23) has rotated relative to the wheel hub (212), said vibration being a vibration acting to rotate one of the annular member (23) and the wheel hub (212) relative to the other in a circumferential direction around the axial direction with respect to their positions after the rotation of the annular member (23) relative to the wheel hub (212), **characterized in that**
the damping mechanism (27) is provided for damping the vibration using a viscous fluid (42) enclosed between the annular member (23) and the wheel hub (212).

2. A straddled vehicle according to claim 1, **characterized in that** the damping mechanism (27) is provided for damping the vibration using the shear resistance of the viscous fluid (42) produced when one of the annular member (23) and the wheel hub (212) rotates relative to the other.

3. A straddled vehicle according to claim 2, **characterized in that:**
at least one wall (23D, 23E) is provided on one of the wheel hub (212) and the annular member (23), the wall (23D, 23E) protruding in the axial direction toward the other one of the wheel hub (212) and the annular member (23), the wall (23D, 23E) extending in the circumferential direction around the axial direction;
at least one groove (2121E, 2121F) is provided on the other one of the wheel hub (212) and the annular member (23), the groove (2121E, 2121F) being open toward the one of the wheel hub (212) and the annular member (23) to face in the axial direction, the groove (2121E, 2121F) extending in the circumferential direction around the axial direction;
the wall (23D, 23E) is received by the groove (2121E, 2121F) and is permitted to move in a circumferential direction around the axial direction;
a gap is provided between an inner surface of the groove (2121E, 2121F) and a side of the wall (23D, 23E) as determined along a radial direction of the wheel hub (212), the gap being filled with the viscous fluid (42); and
the size of the gap is smaller than the thickness of the wall (23D, 23E) as measured in a radial direction.

4. A straddled vehicle according to claim 3, **characterized in that** the wall (23D, 23E) and the groove (2121E, 2121F) extend over the entire circumference around the axial direction.

5. A straddled vehicle according to claim 3 or 4, **characterized in that** a plurality of walls (23D, 23E) and a plurality of grooves (2121E, 2121F) are arranged in a radial direction.

6. A straddled vehicle according to any one of claims 3 to 5, **characterized in that** at least one wall (23D, 23E) and at least one groove (2121E, 2121F) are located outward of the elastic member (262, 262B, 262C) as determined along a radial direction.

7. A straddled vehicle according to claim 1, **characterized in that** the damping mechanism (27) is provided for damping damps the vibration using the circumferential flow of the viscous fluid (42) produced when one of the annular member (23) and the wheel hub (212) rotates relative to the other.

8. A straddled vehicle according to any one of claims 1 to 7, **characterized in that** the rear wheel (20) further includes a seal ring (44) located between the annular member (23) and the wheel hub (212) and positioned to be coaxial with the wheel hub (212) for sealing in the viscous fluid (42) between the annular member (23) and the wheel hub (212).

9. A straddled vehicle according to any one of claims 1 to 8, **characterized in that** at least one of the elastic member (262, 262B, 262C) and the damping mechanism (27) overlaps one of the plurality of bearings (25) as viewed in a direction perpendicular to the axial direction.

10. A straddled vehicle according to any one of claims 1 to 9, **characterized in that:**
one of the wheel hub (212) and the annular member (23) includes a cylindrical outer periphery (2121G) extending in the axial direction;
the other one of the wheel hub (212) and the annular member (23) includes a cylindrical inner periphery (23F1) extending in the axial direction, the inner periphery (23F1) being located outward of the outer periphery (2121G) as determined along a radial direction,
the inner periphery (23F1) overlapping the outer periphery (2121G) as viewed in a radial direction; and
the rear wheel (20) further includes a bush (48) located between the outer periphery (2121G) and the inner periphery (23F1) as determined along a radial direction and
shaped as a cylinder extending in the axial direction.

11. A straddled vehicle according to any one of claims 1 to 10, **characterized in that** the spring characteristics of the elastic member (262C) in the direction of rotation of the annular member (23) relative to the wheel hub (212) during deceleration of the straddled vehicle are softer than the spring characteristics thereof in the direction of rotation of the annular member (23) relative to the wheel hub (212) during acceleration of the straddled vehicle.

12. A straddled vehicle according to any one of claims 1 to 11, **characterized in that** the elastic member (262, 262B) is formed from rubber or resin elastomer.

## Patentansprüche

1. Ein Spreizsitz-Fahrzeug, das umfasst:
einen Motor (14);
ein Hinter-Rad (20), das hinter dem Motor (14) angeordnet ist; und
eine Kette (32), zur Übertragung von Antriebs-Leistung von dem Motor (14) zu dem Hinter-Rad (20),
das Hinter-Rad (20) beinhaltet:
eine Achse (24), die in sich in einer Axial-Richtung in der Links-nach-Rechts-Richtung, mit Bezug auf das Fahrzeug, erstreckt, eine Radial-Richtung erstreckt sich in einer Ebene, senkrecht mit der Axial-Richtung;
eine Rad-Nabe (212), die als ein Zylinder geformt ist, der sich in die Axial-Richtung erstreckt, die Achse (24) ist durch die Rad-Nabe (212) eingesetzt;
eine Mehrzahl von Lagern (25), die zwischen Rad-Nabe (121) und der Achse (24) angeordnet sind, wenn bestimmt entlang einer Radial-Richtung von der Rad-Nabe (212), die Mehrzahl von Lagern (25) lagert die Rad-Nabe (212) drehbar an der Achse (24);
ein Ring-Element (23), das an einem Ende der Rad-Nabe (212) angebracht ist, wenn bestimmt entlang der Axial-Richtung derselben, und positioniert ist um koaxial mit der Rad-Nabe (212) zu sein, das Ring-Element (23) ist positioniert um relativ zu der Rad-Nabe (212), in eine Umfangs-Richtung der Rad-Nabe (212), um die Axial-Richtung, drehbar zu sein;
ein Ketten-Rad (22), das an dem Ring-Element (23) gekoppelt ist, die Kette (32) ist um das Ketten-Rad (22) gewickelt;
ein Elastik-Element (262, 262B, 262C), wobei, wenn die Antriebs-Leistung zu dem Ring-Element (23) über das Ketten-Rad (22) übertragen ist, und das Ring-Element (23) relativ zu der Rad-Nabe (212) dreht, sich das Elastik-Element (262, 262B, 262C) verformt, abhängig von dem Betrag der Drehung des Ring-Elements (23) relativ zu der Rad-Nabe (212); und
einen Dämpfungs-Mechanismus (27) zum Dämpfen einer Vibration in einem von dem Ring-Element (23) und der Rad-Nabe (212), nachdem das Ring-Element (23) sich relativ zu der Rad-Nabe (212) gedreht hat, diese Vibration ist eine Vibration, die wirkt um eines von dem Ring-Element (23) und der Rad-Nabe (212) relativ zu dem anderen in einer Umfangs-Richtung um die Axial-Richtung, mit Bezug auf deren Positionen nach der Drehung des Ring-Elements (23), relativ zu der Rad-Nabe (212) zu drehen, **dadurch gekennzeichnet, dass** der Dämpfungs-Mechanismus (27) zum Dämpfen der Vibration unter Verwendung eines viskosen Fluids (42), das zwischen dem Ring-Element (23) und der Rad-Nabe (212) eingeschlossen ist, vorgesehen ist.

2. Ein Spreizsitz-Fahrzeug gemäß Anspruch 1, **dadurch gekennzeichnet, dass** der Dämpfungs-Mechanismus (27) vorgesehen ist, um die Vibration unter Verwendung des Scherwiderstands des viskosen Fluids (42) zu dämpfen, der erzeugt, wenn eines von dem Ring-Element (23) und der Rad-Nabe (212) relativ zu dem anderen dreht.

3. Ein Spreizsitz-Fahrzeug gemäß Anspruch 2, **dadurch gekennzeichnet, dass:**
zumindest eine Wand (23D, 23E) vorgesehen ist an einem von der Rad-Nabe (212) und dem Ring-Element (23), die Wand (23D, 23E) steht in die Axial-Richtung zu dem anderen von der Rad-Nabe (212) und dem Ring-Element (23) vor, die Wand (23D, 23E) erstreckt sich in die Umfangs-Richtung um die Axial-Richtung;
zumindest eine Nut (2121E, 2121F) ist an dem anderen von der Rad-Nabe (212) und dem Ring-Element (23) vorgesehen, die Nut (2121E, 2121F) ist offen zu dem einen von der Rad-Nabe (212) und dem Ring-Element (23), zugewandt in der Axial-Richtung, die Nut (2121E, 2121F) erstreckt sich in die Umfangs-Richtung um die Axial-Richtung;
die Wand (23D, 23E) ist durch die Nut (2121E, 2121F) aufgenommen und ist ihr gestattet sich in einer Umfangs-Richtung um die Axial-Richtung zu bewegen;
ein Spalt ist zwischen einer Innen-Fläche der Nut (2121E, 2121F) und einer Seite von der Wand (23D, 23E) vorgesehen, wie bestimmt entlang einer Radial-Richtung der Rad-Nabe (212), der Spalt ist mit dem viskosen Fluid (42) gefüllt; und
die Größe des Spalts ist kleiner als die Dicke der Wand (23D, 23E), wenn gemessen in einer Radial-Richtung.

4. Ein Spreizsitz-Fahrzeug gemäß Anspruch 3, **dadurch gekennzeichnet, dass** die Wand (23D, 23E) und die Nut (2121E, 2121F) sich über den gesamten Umfang um die Axial-Richtung erstrecken.

5. Ein Spreizsitz-Fahrzeug gemäß Anspruch 3 oder 4, **dadurch gekennzeichnet, dass** eine Mehrzahl von Wänden (23D, 23E) und eine Mehrzahl von Nuten (2121E, 2121F) in einer Radial-Richtung angeordnet sind.

6. Ein Spreizsitz-Fahrzeug gemäß irgendeinem der Ansprüche 3 bis 5, **dadurch gekennzeichnet, dass** zumindest eine Wand (23D, 23E) und zumindest eine Nut (2121E, 2121F) außerhalb von dem Elastik-Element (262, 262B, 262C), wie bestimmt entlang einer Radial-Richtung, angeordnet sind.

7. Ein Spreizsitz-Fahrzeug gemäß Anspruch 1, **dadurch gekennzeichnet, dass** der Dämpfungs-Mechanismus (27) zum Dämpfen der Vibration unter Verwendung der Umfangsströmung des viskosen Fluids (42) vorgesehen ist, erzeugt wenn eines von dem Ring-Element (23) und der Rad-Nabe (212) relativ zu dem anderen dreht.

8. Ein Spreizsitz-Fahrzeug gemäß irgendeinem der Ansprüche 1 bis 7, **dadurch gekennzeichnet, dass** das Hinter-Rad (20) weiterhin einen Dicht-Ring (44) beinhaltet, der zwischen dem Ring-Element (23) und der Rad-Nabe (212) angeordnet ist, und positioniert ist um koaxial mit der Rad-Nabe (212) zu sein, zum Dichten in dem viskosen Fluid (42) zwischen dem Ring-Element (23) und der Rad-Nabe (212).

9. Ein Spreizsitz-Fahrzeug gemäß irgendeinem der Ansprüche 1 bis 8, **dadurch gekennzeichnet, dass** zumindest eines von dem Elastik-Element (262, 262B, 262C) und dem Dämpfungs-Mechanismus (27) eines von der Mehrzahl von Lagern (25) überlappt, wenn betrachtet in einer Richtung senkrecht zu der Axial-Richtung.

10. Ein Spreizsitz-Fahrzeug gemäß irgendeinem der Ansprüche 1 bis 9, **dadurch gekennzeichnet, dass:**
eine von der Rad-Nabe (212) und dem Ring-Element (23) einen zylindrischen Außen-Umfang (2121G) beinhaltet, der sich in die Axial-Richtung erstreckt;
das andere von der Rad-Nabe (212) und dem Ring-Element (23) beinhaltet einen zylindrischen Innen-Umfang (23F1), der sich in die Axial-Richtung erstreckt, der Innen-Umfang (23F1) ist außerhalb von dem Außen-Umfang (2121G) angeordnet,
wenn bestimmt entlang der Radial-Richtung, der Innen-Umfang (23F1) überlappt den Außen-Umfang (2121G) wenn betrachtet in einer Radial-Richtung; und
das Hinter-Rad (20) beinhaltet weiter eine Hülse (48), die zwischen dem Außen-Umfang (2121G) und dem Innen-Umfang (23F1) angeordnet, wenn bestimmt entlang einer Radial-Richtung, und ist als ein Zylinder geformt, der sich in die Axial-Richtung erstreckt.

11. Ein Spreizsitz-Fahrzeug gemäß irgendeinem der Ansprüche 1 bis 10, **dadurch gekennzeichnet, dass** die Feder-Charakteristika des Elastik-Elements (262C) in der Richtung der Drehung des Ring-Elements (23) relativ zu der Rad-Nabe (212) während Verzögerung des Spreizsitz-Fahrzeugs weicher sind als die Feder-Charakteristika derselben in der Richtung der Drehung des Ring-Elements (23) relativ zu der Rad-Nabe (212) während Beschleunigung des Spreizsitz-Fahrzeugs.

12. Ein Spreizsitz-Fahrzeug gemäß irgendeinem der Ansprüche 1 bis 11, **dadurch gekennzeichnet, dass** das Elastik-Element (262, 262B) aus Gummi oder Harz-Elastomer gebildet ist.

## Revendications

1. Véhicule à enfourcher comprenant :
un moteur (14) ;
une roue arrière (20) située à l'arrière du moteur (14) ; et
une chaîne (32) pour transmettre une puissance motrice du moteur (14) à la roue arrière (20), la roue arrière (20) comprenant :
un essieu (24) s'étendant dans une direction axiale dans la direction gauche-droite par rapport au véhicule, une direction radiale s'étendant dans un plan perpendiculaire à la direction axiale ;
un moyeu de roue (212) en forme de cylindre qui s'étend dans la direction axiale,
l'essieu (24) étant inséré à travers le moyeu de roue (212) ;
une pluralité de paliers (25) situés entre le moyeu de roue (212) et l'essieu (24) comme déterminé le long d'une direction radiale du moyeu de roue (212), la pluralité de paliers (25) supportant de manière rotative le moyeu de roue (212) sur l'essieu (24) ;
un élément annulaire (23) fixé à une extrémité du moyeu de roue (212) comme déterminé le long de la direction axiale de celui-ci et positionné pour être coaxial avec le moyeu de roue (212), l'élément annulaire (23) étant positionné pour pouvoir tourner par rapport au moyeu de roue (212) dans une direction circonférentielle du moyeu de roue (212) autour de la direction axiale ;
un pignon (22) couplé à l'élément annulaire (23), la chaîne (32) étant enroulée autour du pignon (22) ;
un élément élastique (262, 262B, 262C), dans lequel, lorsque la puissance motrice est transmise à l'élément annulaire (23) par l'intermédiaire du pignon (22) et que l'élément annulaire (23) tourne par rapport au moyeu de roue (212), l'élément élastique (262, 262B, 262C) se déforme élastiquement en fonction de la quantité de rotation de l'élément annulaire (23) par rapport au moyeu de roue (212) ; et
un mécanisme d'amortissement (27) pour amortir une vibration dans un premier parmi l'élément annulaire (23) et le moyeu de roue (212) après que l'élément annulaire (23) a tourné par rapport au moyeu de roue (212), ladite vibration étant une vibration agissant pour faire tourner un premier parmi l'élément annulaire (23) et le moyeu de roue (212) par rapport à l'autre dans une direction circonférentielle autour de la direction axiale par rapport à leurs positions après la rotation de l'élément annulaire (23) par rapport au moyeu de roue (212), **caractérisé en ce que** le mécanisme d'amortissement (27) est agencé pour amortir la vibration en utilisant un fluide visqueux (42) enfermé entre l'élément annulaire (23) et le moyeu de roue (212).

2. Véhicule à enfourcher selon la revendication 1, **caractérisé en ce que** le mécanisme d'amortissement (27) est agencé pour amortir la vibration en utilisant la résistance au cisaillement du fluide visqueux (42) produite lorsqu'un premier parmi l'élément annulaire (23) et le moyeu de roue (212) tourne par rapport à l'autre.

3. Véhicule à enfourcher selon la revendication 2, **caractérisé en ce que** :
au moins une paroi (23D, 23E) est prévue sur un premier parmi le moyeux de roue (212) et l'élément annulaire (23), la paroi (23D, 23E) faisant saillie dans la direction axiale vers l'autre parmi le moyeu de roue (212) et l'élément annulaire (23), la paroi (23D, 23E) s'étendant dans la direction circonférentielle autour de la direction axiale ;
au moins une rainure (2121E, 2121F) est agencée sur l'autre parmi le moyeu de roue (212) et l'élément annulaire (23), la rainure (2121E, 2121F) étant ouverte vers le premier parmi le moyeu de roue (212) et l'élément annulaire (23) pour faire face dans la direction axiale, la rainure (2121E, 2121F) s'étendant dans la direction circonférentielle autour de la direction axiale ;
la paroi (23D, 23E) est reçue par la rainure (2121E, 2121F) et est autorisée à se déplacer dans une direction circonférentielle autour de la direction axiale ;
un espacement est prévu entre une surface intérieure de la rainure (2121E, 2121F) et un côté de la paroi (23D, 23E) tel que déterminé le long d'une direction radiale du moyeu de roue (212), l'espacement étant rempli du fluide visqueux (42) ; et
la taille de l'espacement est inférieure à l'épaisseur de la paroi (23D, 23E) telle que mesurée dans une direction radiale.

4. Véhicule à enfourcher selon la revendication 3, **caractérisé en ce que** la paroi (23D, 23E) et la rainure (2121E, 2121F) s'étendent sur la circonférence entière autour de la direction axiale.

5. Véhicule à enfourcher selon la revendication 3 ou 4, **caractérisé en ce qu'**une pluralité de parois (23D, 23E) et une pluralité de rainures (2121E, 2121F) sont agencées dans une direction radiale.

6. Véhicule à enfourcher selon l'une quelconque des revendications 3 à 5, **caractérisé en ce qu'**au moins une paroi (23D, 23E) et au moins une rainure (2121E, 2121F) sont situées à l'extérieur de l'élément élastique (262, 262B, 262C) comme déterminé le long d'une direction radiale.

7. Véhicule à enfourcher selon la revendication 1, **caractérisé en ce que** le mécanisme d'amortissement (27) est agencé pour amortir la vibration en utilisant l'écoulement circonférentiel du fluide visqueux (42) produit lorsqu'un premier parmi l'élément annulaire (23) et le moyeu de roue (212) tourne par rapport à l'autre.

8. Véhicule à enfourcher selon l'une quelconque des revendications 1 à 7, **caractérisé en ce que** la roue arrière (20) comprend en outre une bague d'étanchéité (44) située entre l'élément annulaire (23) et le moyeu de roue (212) et positionnée pour être coaxiale avec le moyeu de roue (212) pour sceller le fluide visqueux (42) entre l'élément annulaire (23) et le moyeu de roue (212).

9. Véhicule à enfourcher selon l'une quelconque des revendications 1 à 8, **caractérisé en ce qu'**au moins un premier parmi l'élément élastique (262, 262B, 262C) et le mécanisme d'amortissement (27) chevauche l'un de la pluralité de paliers (25) comme observé dans une direction perpendiculaire à la direction axiale.

10. Véhicule à enfourcher selon l'une quelconque des revendications 1 à 9, **caractérisé en ce que**: un premier parmi le moyeu de roue (212) et l'élément annulaire (23) comporte une périphérie extérieure cylindrique (2121G) s'étendant dans la direction axiale ;
l'autre parmi le moyeu de roue (212) et l'élément annulaire (23) comprend une périphérie intérieure cylindrique (23F1) s'étendant dans la direction axiale, la périphérie intérieure (23F1) étant située à l'extérieur de la périphérie extérieure (2121G) comme déterminé le long d'une direction radiale, la périphérie intérieure (23F1) chevauchant la périphérie extérieure (2121G) comme observé dans une direction radiale ; et
la roue arrière (20) comprend en outre une douille (48) située entre la périphérie extérieure (2121G) et la périphérie intérieure (23F1) comme déterminé le long d'une direction radiale et ayant la forme d'un cylindre s'étendant dans la direction axiale.

11. Véhicule à enfourcher selon l'une quelconque des revendications 1 à 10, **caractérisé en ce que** les caractéristiques d'élasticité de l'élément élastique (262C) dans la direction de rotation de l'élément annulaire (23) par rapport au moyeu de roue (212) pendant une décélération du véhicule à enfourcher sont plus souples que les caractéristiques d'élasticité de celui-ci dans la direction de rotation de l'élément annulaire (23) par rapport au moyeu de roue (212) pendant une accélération du véhicule à enfourcher.

12. Véhicule à enfourcher selon l'une quelconque des revendications 1 à 11, **caractérisé en ce que** l'élément élastique (262, 262B) est constitué d'un élastomère de caoutchouc ou de résine.
